# EUROPEAN PATENT SPECIFICATION

(11) **EP 2 115 598 B1**
(45) Date of publication and mention of the grant of the patent: **30.03.2011**
(21) Application number: 08702517.7
(22) Date of filing: 24.01.2008
(51) Int. Cl.: G06F 12/08

(54) **HARDWARE TRIGGERED DATA CACHE LINE PRE-ALLOCATION**
HARDWAREGETRIGGERTE DATEN-CACHELEITUNGS-VORZUTEILUNG
PRE-ALLOCATION DE LIGNE DE CACHE DE DONNEES DECLENCHEE PAR HARDWARE

(30) Priority: 25.01.2007 US 886598 P
(43) Date of publication of application: 11.11.2009
(73) Proprietor: NXP B.V., 5656 AG Eindhoven (NL)
(72) Inventor: VAN DE WAERDT, Jan-Willem, San Jose, California 95131 (US)
(74) Representative: Williamson, Paul Lewis
(86) International application number: PCT/IB2008/050262
(87) International publication number: WO 2008/090525

(56) References cited:
- GB-A- 2 296 353
- US-A1- 2003 208 660
- US-A1- 2004 128 452
- CHI-HUNG CHI ET AL: "Compiler driven data cache prefetching for high performance computers" TENCON '94. IEEE REGION 10'S NINTH ANNUAL INTERNATIONAL CONFERENCE. TH EME: FRONTIERS OF COMPUTER TECHNOLOGY. PROCEEDINGS OF 1994 SINGAPORE 22-26 AUG. 1994, NEW YORK, NY, USA,IEEE, 22 August 1994 (1994-08-22), pages 274-278, XP010127054 ISBN: 978-0-7803-1862-5

## Description

This invention relates to computer systems, and more particularly to cache memory in which store operations generate hardware requests for cache line pre-allocation. Computer programs and data are stored in memory. Unfortunately, the largest, most affordable memories have the slowest access times. Very high speed memories that can be accessed without causing the processor wait are expensive, volatile, small, and need to be located very close by. So data and programs are conventionally moved around between memory types in an access-speed hierarchy to accommodate a variety of sometimes conflicting needs. Once downloaded from disk or on-line, working programs and data are held in a computer's main memory, which typically comprises random access memory (RAM) semiconductor integrated circuits.

High performance systems, especially more modern microprocessors, sample portions of the main memory into high speed "cache" memory. If the program and data a processor needs to execute its next instruction can be found in the cache memory, then the execution speeds will increase because the access delays to main memory will not be suffered. What data and programs in main memory should be copied to cache memory , and when updates in cache memory should be flushed back to main memory has not been easy to correctly manage in conventional systems. So performance suffers when there are cache "misses". The computer architecture, and program branches taken during run∼time, very much control how much benefit will be derived from a cache memory implementation.

US 2004/0128452 A1 describes allocating cache lines including incurring a cache write miss, and after incurring the cache write miss, writing data having a memory address to a cache line that does not include data at the memory address and that only includes invalid data.

US2003/Q208660A1 describes hardware and software directed pre-fetching technique performed without explicit pre-fetch instructions utilized within the program stream.

Chi-Hung Chi et all in "Compiler driven data cache prefetching for high performance computers", TENGON 94 propose a prefetching scheme called embedded data prefetching to prefetch array references with constant strides accurately.

GB2296353A describes a cache memory system with reduced request-block requests from being accepted by the cache memory based on the type of requests the cache is already servicing.

So cache systems and methods that can deal more effectively with the run-time behavior are needed.

The invention is defined in the claims.

In an example embodiment, a computer system includes a data cache supported by a copy-back buffer and pre-allocation request stack. A programmable trigger mechanism inspects each store operation made by the processor to the data cache to see if a next cache line should be pre-allocated. If the store operation memory address occurs within a range defined by START and END programmable registers, then the next cache line that includes a memory address within that defined by a programmable STRIDE register is requested for pre-allocation. Bunches of pre-allocation requests are organized and scheduled by the pre-allocation request stack, and will take their turns to allow the cache lines being replaced to be processed through the copy-back buffer. By the time the processor gets to doing the store operation in the next cache line, such cache line has already been pre-allocated and there will be a cache hit, thus saving stall cycles.

An advantage of the present invention is significant processor performance improvements can be achieved.

another advantage of the present invention is a cache scheme is provided that has minimal run-time overhead for the processor.

A still further advantage of the present invention is a cache system is provided in which the caching parameters are programmable.

The above summary of the present invention is not intended to represent each disclosed embodiment, or every aspect, of the present invention. Other aspects and example embodiments are provided in the figures and the detailed description that follows.

The invention may be more completely understood in consideration of the folllowing detailed description of various embodiments of the invention in connection with the accompanying drawings, in which:
FIG. 1 is a functional block diagram of a cache memory system in an embodiment of the present invention;
FIG. 2 is a timing diagram comparing store operations for cache misses when the appropriate cache lines are not pre-allocated and when they are pre-allocated as in the present invention;
FIG. 3 is a functional block diagram of a processor and main memory that includes a copy-back buffer and FIFO for pre-allocation requests as used in embodiments of the present invention; and
Fig. 4 is a method embodiment of the present invention for making pre-allocation requests for a next cache line during a store operation to the data cache by the processor.

While the invention is amenable to various modifications and alternative forms, specifies thereof have been shown by way of example in the drawings and will be described in detail.

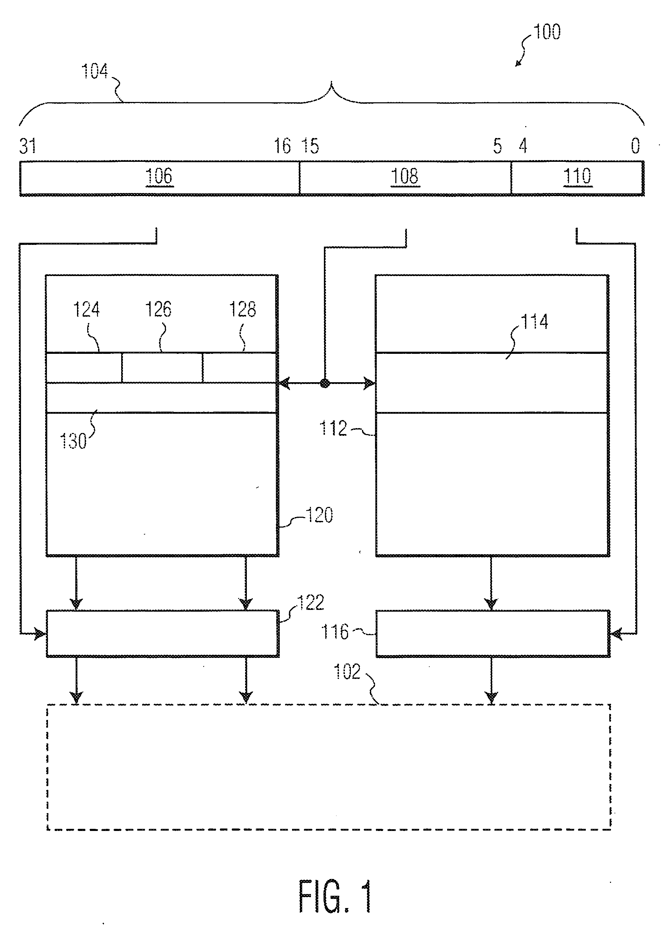

Fig. 1 represents a cache memory system 100 for a 4-gigabyte (2^32) memory space 102 in an embodiment of the present invention. A processor makes program and data accesses into such address space using a 32-bit memory address bus 104 that can individually address each byte of storage. The memory address bus 104 itself is divided, for cache purpose, into a tag 106 (bits 31:16), a set address 108 (bits 15:5), and a byte index 110 (bits 4:0). A cache data memory 112 has 64-Kbytes of storage capacity organized as 2^11 "cache line" rows of 32-bytes.

Each row of cache data memory 112 has a cache line 114 of 32-bytes of consecutive memory from memory space 102, and is selected by the set address 108 (bits 15:5). Each individual byte within a cache line 114 is selectable by the byte index 110 (bits 4:0) using a byte selector 116. Cache lines 114 are transferred 32-bytes wide between the cache memory 112 and other storage structures in the memory hierarchy.

A cache tag-valid-dirty memory 120 is used to store information about the 2^11 cache lines 114 of data currently resident in cache data memory 112. Since only 64-Kbytes of data in 32-byte blocks from main memory 102 can be copied to cache data memory 112, which ones are resident are identified by their tag address 106. If a tag comparator 122 finds that a tag 124 in tag-valid-dirty memory 120 matches a current tag 106 issued by the processor, then a "hit" is reported and the processor data access can be supplied from cache data memory 112. A valid bit 126 indicates whether a copy back or eviction of the associated cache line 114 is needed, in case the line was replaced by another line, and is used to validate tag comparator 122. A dirty bit 128 is used during cache line replacement, not during retrieval of cache data. A 32-bit byte valid block 130 indicates with each of its bits the validity and presence of respective individual bytes in a corresponding 32-byte cache line 114.

If a processor load operation "hits" in the cache, the requested data bytes are provided immediately by cache data memory 112 to the processor. But if the processor load operation "misses", as announced by tag comparator 122, the corresponding 32-byte line in main memory that includes the requested data bytes is retrieved directly, albeit not as quick as if the cache had hit. Such access imposes stall cycles on the processor while the main memory 102 responds. The retrieved 32-byte wide line of data can be directed to replace cache lines 114 that, for example, have not been used very recently or very often. If the cache line being replaced line is dirty, as indicated by dirty bit 128, the bytes indicated as valid in block 130 are evicted to the main memory 102.

Whenever a processor store operation "hits" in the cache, the corresponding data bytes are re-written in the cache data memory 112, and the respective byte valid bits in its associated byte-valid block 130 are set. These thirty-two bits indicate that the corresponding bytes in the cache data memory 112 need to be used to update stale data in the main memory 102. But if the processor store operation "misses" in the cache, an associated 32-byte wide line of data needs to be allocated to the cache. A cache line 114 is tagged and all its byte valid bits in block 130 are set to "0", meaning not valid. No data is retrieved from main memory 102 because cache memory will he used later to overwrite the corresponding bytes. Whenever a replaced line 114 is dirty, its valid bytes are the ones evicted to main memory 102. Such policy is known as a "write-allocate" miss policy.

Cache "misses" generate processor stall cycles, and can substantially reduce processor performance. So the number of cache misses and associated stall cycles is minimized in embodiments of the present invention. Pre-fetching can reduce the number of load misses by anticipating which data bytes and lines in main memory 102 will be used in the near future. The anticipated lines are fetched from the main memory into the cache data memory 112 before the processor actually needs the data. Once the processor executes the load operation, the data bytes will thereafter be found in the cache, eliminating stall cycles that would otherwise be caused by a "miss".

Store "misses" and associated stall cycles are minimized with a write-allocate miss policy. A cache line 114 is "allocated" rather than being fetched from main memory, as in the write-fetch miss policy. No data from the main memory is actually transferred, so the allocation policy mechanism can be fast and not slowed down by waiting for main memory accesses. However, when an allocated cache line replaces a "dirty" cache line, stall cycles may occur while evicting the valid bytes in the dirty line 114 to main memory 102.

Processor execution would ordinarily be stalled while the store operation evicts the replaced cache line 114 and allocates the new cache line 114. So a single-line copy-back or eviction buffer between the cache and the main memory is included to do the copy-back operation in background. But, if a series of evictions in a short period of time occur, the copy back buffer can become a bottleneck, because the slower main memory may not keep up with the cache line eviction rate. If that happens, the later evictions may cause stall cycles while waiting for the copy-back buffer to finish earlier jobs.

Evictions cannot be prevented, so alternative embodiments of the present invention do their evictions early to avoid causing processor stall cycles. Pre-fetching helps for load operations, and store operations can be helped by pre-allocation. Pre-allocation allocates a cache line before the processor store operation accesses the cache, and evicts a replaced line when necessary. As a result, by the time the processor executes a store operation, the cache line will already be allocated in the cache. If such pre-allocation is done far enough ahead of the store operation, the main memory access cycles associated with the eviction will all be hidden from the processor.

Each eviction of a replaced line may cause stall cycles if a copy back buffer is not available. Pre-allocation can be used to reduce crowding. It separates in time a possible costly event from the moment at which a cache line is required for a store operation. Only when a required cache line is not pre-allocated soon enough, will the corresponding store operation cause the processor to stall.

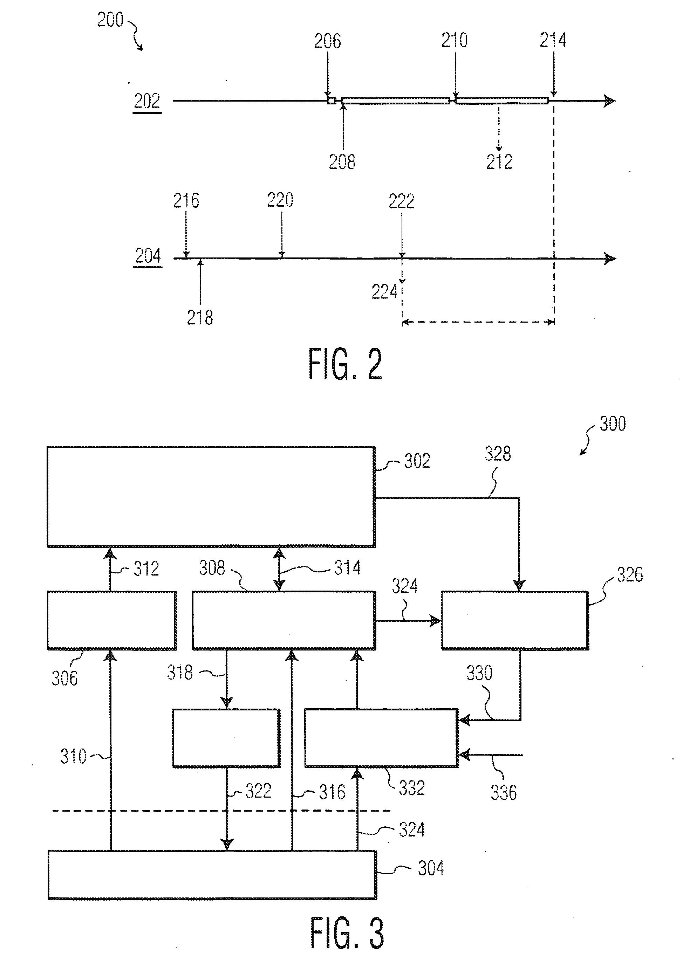

Fig. 2 compares processor timing for a conventional no pre-allocation sequence 202 and a pre-allocation sequence 204 of the present invention. A processor store operation 206 results in a cache miss. A step 208 requires that the cache line being replaced be put in a copy-back buffer. A step 210 can then allocate a cache line for the store operation. But, processor stall cycles 212 will be encountered. A step 214 then finishes the store operation.

The pre-allocation sequence 204 of the present invention is on the same time scale, and the processor store operation is attempted at the same point. But embodiments of the present invention work ahead of the store operation request in the background to see to it that a cache hit will occur and thus save processor stall cycles. A pre-allocation request 216, generated by hardware or software, causes a step 218 to put the replaced cache line in the copy-back buffer. A step 220 pre-allocates the new cache line. When the processor goes to do a store operation 222, it gets a cache hit and no stall cycles 224 are incurred. The savings is thus the time span from step 224 to corresponding step 214.

Pre-allocating far enough ahead of the store can significantly reduce the number of potential stall cycles. If a series of evictions needs to be done in a short period of time, enough time may be available using only a single copy back buffer to spread the evictions and be ready for the next store operation. A dedicated first-in, first-out (FIFO) structure, as in Fig. 3, may be used to keep a series of addresses for outstanding pre-allocation requests.

Region based pre-allocation can be used to implement next sequential cache line pre-allocation by setting the REGION_STRIDE to the size of a data cache line (= 32). A FIFO or some other memory structure to hold a series of addresses on which to perform pre-allocation. A hardware trigger mechanism is used to trigger pre-allocation requests.

Fig. 3 represents a computer system embodiment of the present invention, and is referred to herein by the general reference numeral 300. Computer system 300 comprises a processor 302 with a main memory 304, an instruction cache 306, and a data cache 308. Lines of instructions 310 are provided instruction-by-instruction 312 through the instruction cache 306. Load and store data operations 314 by the processor 302 are supported by data cache 308. Lines of data 316 are cached to the data cache 308, e.g., as described in Fig. 1. Stores will only update the data cache. Only when dirty data is evicted from the cache a copy-back buffer 320 be used for later cache line replacement 322. Any store operation by processor 302 to the data cache 308 will generate a cache line tag 324 for a cache line pre-allocation trigger 326. START, END, and STRIDE pre-allocation trigger parameters 328 are written to corresponding registers to be compared with the cache line tag 324. If appropriate, a next cache line request 330 is forwarded to a pre-allocation request stack, e.g., a FIFO-register 332. Earlier and later requests may be simultaneously pending while being serviced in background off-line of the processor 302. No replacement cache line 324 is required simply for store pre-allocations. If the processor needs a replacement cache line 324 for a load operation, it will be fetched from main memory 304.

Pre-allocation can be initiated or triggered by explicit software control 336. ALLOCATE operations, inserted either by software programmers or by compiler toolchains, can be used to allocate a cache line before data is stored to it. But ALLOCATE operations can increase code size, and use up processor issue bandwidth. When an ALLOCATE operation is issued, an opportunity to execute a useful instruction is lost because another operation can not be issued.

At software compile-time, sometimes the best places to insert ALLOCATE operations in the processor code cannot be precisely predicted because the processor run-time behavior introduces uncertainty. Compile-time and run-time behavior differ, as the actual stall cycles incurred depend on memory subsystem latencies, branch miss predictions, etc. The efficiency of the scheduled ALLOCATE operations will only be apparent during the run-time behavior.

Embodiments of the present invention therefore trigger pre-allocation with the processor hardware at run-time, rather than exclusively with software operations at compile-time. To illustrate how such hardware triggered pre-allocation can be beneficial, Table-I suggests a C++ subroutine to copy 1,024 data bytes from one location (src) to another (dst).

**TABLE-I example program**

| |
|---|
| copy 1 (char* src, char* dst) |
| { |
| for (int i = 0; i < 1024; i++) |
| *(dst+i) = *(src+i); |
| } |

In next-sequential cache line pre-allocation embodiments of the present invention, a hardware trigger is included such that whenever the processor stores to an address-A, the processor determines if "address-A + 32" is also present in the cache. If it is not, a pre-allocation request is triggered for "address-A + 32".

For example, if a cache is empty when the instruction code of Table-I starts, the store to dst (i = 0) will miss in the cache, so it will allocate the cache line for address-dst and it will trigger a pre-allocation of the cache line for "address-dst + 32". By the time the code stores to dst+32 (i= 32), the line is already pre-allocated in the cache, and the store will hit in the cache. The store to dst+32 will trigger a pre-allocation of the cache line for address dst+64. By the time the code stores to dst+64 (i= 64), the line is already pre-allocated in the cache, and the store will hit in the cache. A store to dst+64 will trigger a pre-allocation of the cache line for address dst+96, and so on.

So after an initial store miss to a first destination location dst, no further misses will be encountered. Such pre-allocation allocates the lines of the dst structure in advance. The speed/run-time behavior of the code execution paces the speed of the pre-allocation.

Such resembles traditional next-sequential cache line pre-fetching as performed for loads to the data cache or for instructions from the instruction cache.

The sequential nature of the store pattern of "copy1" in Table-I is typical for a lot of applications. But not all applications will have a sequential store pattern. Triggers that rely solely on sequential storage patterns may not deliver much performance improvement.

Instead of pre-allocating ahead a fixed stride of a 32-byte cache line, the stride could be made programmable, e.g., with a REGION_STRIDE. The pre-allocation memory region is made programmable, e.g., with a REGION_START and a REGION_END.

Consider a "copy2" sub-routine in Table-II that copies a 2-dimensional structure of 1,024 data bytes from one location (src) to another (dst).

**TABLE-II**

| |
|---|
| copy2 (char* src, char* dst) |
| { |
| for (int j = 0; j < 64; i++) // 64 "rows" |
| for (int i = 0; i < 16; i++) // 16 bytes in a "row" |
| *(dst+(j*512)+i) = *(src+(j+51?)+i); |
| } |

Such copies a smaller two-dimensional sub-structure of 64* 16 bytes from a larger two-dimensional structure 512-bytes wide. Programmable pre-allocate attributes, REGION_STRIDE, REGION_START, and REGION_END, are set, as in Table-III, to enable pre-allocation for the destination location "dst".

**TABLE-III**

| | |
|---|---|
| REGION_STRIDE | = 512 (width of the large structure with the copied structure); |
| REGION_START | = dst (start of the destination structure); |
| REGION_END | = dst + (64*512) (end of the destination structure). |

With such settings, a store to a row will trigger a pre-allocation for the next row. In other words, a store to address-A contained within a region, (REGION_START <= A <= REGION_END), will trigger a pre-allocation for an address A+512 (REGION_STRIDE = 512).

The software involvement described with Fig. 3 is limited to a one-time setting of three attributes, before the example code "copy2" is executed. The main application code itself is unaffected, unlike a full software based approach in which each individual allocation is triggered by an explicit ALLOCATE operation that also consumes issue bandwidth.

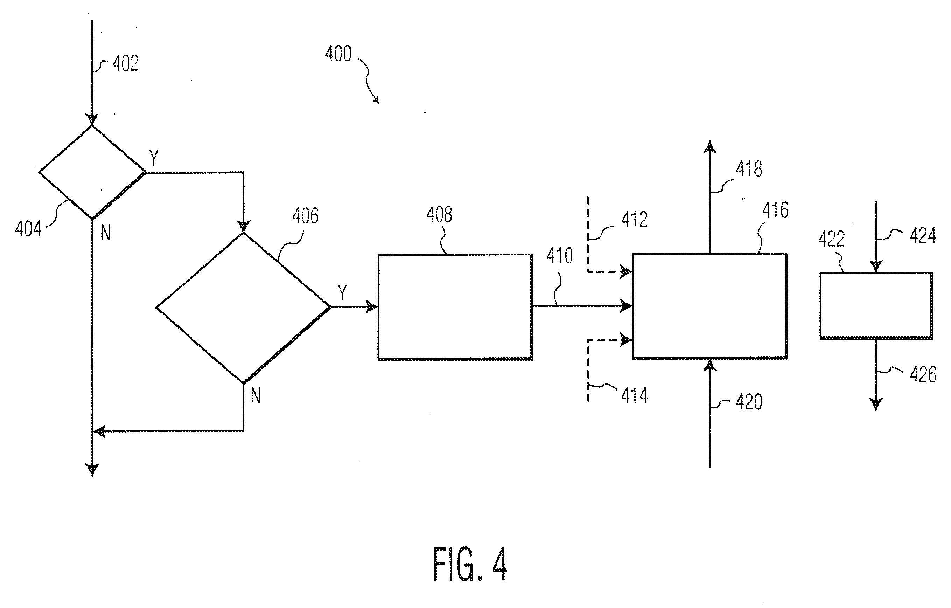

Fig. 4 represents a method embodiment of the present invention, and is referred to herein by the general reference numeral 400. Method 400 intercepts processor load/store operations 402 and a step 404 tests if it is a store operation. If so, a check 406 determines if the store is in the range of addresses between REGION_START and REGION_END. If so, a step 408 triggers a pre-allocation request 410 for a cache line that suits address-A plus REGION_STRIDE. An earlier request 412 and a later request 414 may also have been received by a step 416. Such step 416 organizes and provides cache lines 418 to the data cache. The pre-allocation requests 410, 412, 414, and cache lines 418 and 420 do not have to wait for a copy-back buffer 422 to receive evicted cache lines 424 and flush cache lines 426 to main memory. Before pre-allocation 416 can pre-allocate a cache line, any dirty data in the current cache line location must be evicted to the copy back buffer. In this sense, pre-allocation does have to wait for the copy back buffer when it is not available. However, as lines are allocated ahead, this should not result in processor stall cycles, but only in a delay of the pre-allocation.

Embodiments of the present invention spread cache line allocation requests by doing such requests in advance of the processor store operation. Demands on critical resources, like a copy-back line buffer, are spread over more time, and thereby less likely to culminate in stall cycles. Avoiding stall cycles results in better overall processor performance.

The present invention could be used for any type of data caches, not necessarily processor caches. Multiple pre-allocation regions with different strides could be used. Different hardware pre-allocation triggers could be devised. Negative region stride could be supported, for reversed traversal of memory structures.

A patent infringement detection method of the present invention depends on the fact that the pre-allocation trigger will require some minimal software involvement. In the example of a hardware trigger, the software would reveal itself by any setting of REGION_STRIDE, REGION_START and REGION_END registers. Such information might be easily found in the code that runs on the device suspected of patent infringement, or such registers may described in the device user manual.

## Claims

1. A computer system (300), comprising:
a data cache (308) between a processor (302)and a main memory (304) and said data cache being supported by a copy-back buffer (320) **characterised by** further comprising:
a pre-allocation request memory structure (332) for accumulating and scheduling pre-allocation requests so that each pre-allocation request will take its turn waiting for said copy-back buffer to complete its handling of cache lines being replaced in the data cache by pre-allocated cache lines;
a programmable trigger mechanism (326) for inspecting each store operation made by the processor to the data cache to see if a next cache line should be pre-allocated, and if so, for sending a corresponding request to the pre-allocation request memory structure.

2. The computer system of Claim 1, further comprising:
programmable registers for holding parameters (328) needed to determine if a next cache line should be pre-allocated.

3. The computer system of Claim2, wherein:
the programmable registers are operable such that if a store operation memory address occurs within a range defined by START and END programmable registers, then the next cache line that includes a memory address within a range defined by said store operation memory address and programmable STRIDE register will be requested for pre-allocation;
wherein, when the processor executes the store operation in the next cache line, such cache line has already been pre-allocated and there will be a cache hit.

## Patentansprüche

1. Computersystem (300) aufweisend:
einen Datencache (308) zwischen einem Prozessor (302) und einem Hauptspeicher (304) und wobei der Datencache durch einen Rückkopierpuffer (320) unterstützt ist, **gekennzeichnet durch** ferner aufweisend:
eine Vor-Zuteilungsanfragespeicherstruktur (332) zum Akkumulieren und Planen von Vor-Zuteilungsanfragen so dass jede Vor-Zuteilungsanfrage seine Runde nehmen wird, darauf wartend, dass der Rückkopierpuffer seine Handhabung von Cachelinien, die in dem Datencache **durch** vor-zugeteilte Cachelinien ersetzt werden, abschließt;
einen programmierbaren Trigger-Mechanismus (326) zum Inspizieren von jeder Speicheroperation, die von dem Prozessor auf dem Datencache ausgeführt wird, um zu sehen, ob eine nächste Cachelinie vor-zugeteilt werden sollte und, wenn dem so ist, zum Senden einer entsprechenden Anfrage an die Vor-Zuteilungsanfragespeicherstruktur.

2. Computersystem nach Anspruch 1, ferner enthaltend:
programmierbare Register zum Halten von Parametern (328), die benötigt werden zum Bestimmen, ob eine nächste Cachelinie vor-zugeteilt werden sollte.

3. Computersystem nach Anspruch 2, wobei:
die programmierbaren Register betreibbar sind, so dass, wenn eine Speicheroperationsspeicheradresse innerhalb eines Bereichs auftritt, der definiert ist durch programmierbare START-und END-programmierbare Register, dann die nächste Cachelinie, die die Speicheradresse innerhalb eines Bereiches aufweist, der definiert ist durch die Speicheroperationsspeicheradresse und ein programmierbares STRIDE-Register, für eine Vor-Zuweisung angefordert werden wird;
wobei, wenn der Prozessor die Speicheroperation in der nächsten Cachelinie ausführt, solch eine Cachelinie bereits vor-zugewiesen wurde und ein Cache-Treffer vorliegen wird.

## Revendications

1. Système informatique (300), comprenant :
un cache de données (308) entre un processeur (302) et une mémoire principale (304), et ledit cache de données étant supporté par un tampon de recopie (320), **caractérisé en ce qu'**il comporte en outre :
une structure de mémoire de requêtes de pré-affectation (332) pour accumuler et séquencer des requêtes de pré-affectation, de telle sorte que chaque requête de pré-affectation prend son tour dans l'attente que ledit tampon de recopie termine son traitement de lignes de cache remplacées dans le cache de données par des lignes de cache pré-affectées ;
un mécanisme de déclenchement programmable (326) pour inspecter chaque opération de stockage réalisée par le processeur vers le cache de données pour voir si une ligne de cache suivante devrait être pré-affectée et le cas échéant, pour envoyer une requête correspondante à la structure de mémoire de requêtes de pré-affectation.

2. Système informatique selon la revendication 1, comprenant en outre :
des registres programmables pour maintenir des paramètres (328) nécessaires pour déterminer si une ligne de cache suivante devrait être pré-affectée.

3. Système informatique selon la revendication 2, dans lequel :
les registres programmables peuvent fonctionner de telle sorte que si une adresse mémoire d'opération de stockage se trouve dans un intervalle défini par des registres programmables START et END, alors la ligne de cache suivante, qui contient une adresse mémoire dans un intervalle défini par ladite adresse mémoire d'opération de stockage et un registre programmable STRIDE, requerra une pré-affectation ;
dans lequel, lorsque le processeur exécute l'opération de stockage dans la ligne de cache suivante, ladite ligne de cache est déjà pré-affectée et il y aura un succès de cache.
